Europäisches Patentamt

European Patent Office

Office européen des brevets

(11) Veröffentlichungsnummer : **0 135 098**
**B1**

(12) **EUROPÄISCHE PATENTSCHRIFT**

(45) Veröffentlichungstag der Patentschrift :
28.09.88

(51) Int. Cl.⁴ : **G 01 N 31/16**

(21) Anmeldenummer : 84109275.2

(22) Anmeldetag : 04.08.84

(54) Reagenz für die Wasserbestimmung nach Karl-Fischer.

(30) Priorität : 11.08.83 DE 3329020

(43) Veröffentlichungstag der Anmeldung :
27.03.85 Patentblatt 85/13

(45) Bekanntmachung des Hinweises auf die Patenterteilung : 28.09.88 Patentblatt 88/39

(84) Benannte Vertragsstaaten :
AT BE CH DE FR GB IT LI LU NL SE

(56) Entgegenhaltungen :
FR-A- 2 193 490
ANALYTICAL CHEMISTRY, Band 42, Nr. 12, Oktober
1970, Seiten 1428-1429, USA; G.E. KELLUM et al.:
"Determination of water in nylon with Karl Fischer
reagent using fluorinated alcohols as solvents"
JOURNAL OF ANALYTICAL CHEMISTRY OF THE
USSR, Band 35, Nr. 11, Teil 2, November 1980, Seiten
1426-1428, New York, USA; S.I. PETROV et al.: "A
new electrolyte for the coulometric determination of
water"
Die Akte enthält technische Angaben, die nach dem
Eingang der Anmeldung eingereicht wurden und die
nicht in dieser Patentschrift enthalten sind.

(73) Patentinhaber : RIEDEL-DE HAEN AKTIENGESELLS-
CHAFT
Wunstorfer Strasse 40
D-3016 Seelze 1 (DE)

(72) Erfinder : Scholz, Eugen, Dr.
Silberweg 8
D-3008 Garbsen 1 (DE)

(74) Vertreter : Urbach, Hans-Georg, Dr. et al
p.A. CASSELLA AKTIENGESELLSCHAFT Postfach
D-6000 Frankfurt am Main 61 (DE)

## Beschreibung

Die Erfindung bezieht sich auf ein Reagenz für die Wasserbestimmung.

Für die Titration von Wasser eignet sich bekanntlich ein Reagenz, das Karl Fischer entwickelt hat. Das Reagenz besteht üblicherweise aus einer Lösung von Jod, Schwefeldioxid und Pyridin in Methanol (vgl. Angew. Chemie 48 (1935), 394). Bei der Durchführung der Wasserbestimmung wird die zu untersuchende Probe bevorzugt in Methanol gelöst und dann mit der vorgenannten Lösung titriert. Da dieses Einkomponentenreagenz nicht lagerstabil ist, wird in der Praxis auch ein Zweikomponentenreagenz verwendet, das einerseits aus einer Lösung von Schwefeldioxid und Pyridin in Methanol (Lösung A) und andererseits aus einer methanolischen Jodlösung (Lösung B) besteht. Die zu untersuchende Probe wird in der Lösung A gelöst und mit der Lösung B titriert. Für die coulometrische Wasserbestimmung wird ein analoges Einkomponentenreagenz verwendet, das das Jod in reduzierter Form als Jodid enthält. Die zu untersuchende Probe wird in die Lösung eingebracht, und anschließend wird das Jodid anodisch zu Jod oxidiert.

Es wurde bereits versucht, das im Einkomponentenreagenz verwendete Lösemittel Methanol teilweise durch andere Lösemittel zu ersetzen ; hierzu wurden insbesondere Benzol, Dioxan, Eisessig, Ethanol, Acetonitril und Dimethylformamid eingesetzt (vgl. Chemical Analysis, Volum 5, Aquametry, Part III, Seiten 101 + 102, 1980, 2. Auflage, Verlag John Wiley & Sons).

Die meisten dieser Ersatzmittel hatten den Nachteil, daß sie die entstehenden Aminsalze nicht zu lösen vermochten und den Endpunkt der Titration undeutlich machten.

Weitere Ersatzmittel für Methanol als Lösemittel in KF-Reagentien sind Ethylenglykolmonomethylether (2-Methoxyethanol) (vgl. Anal. Chem. 27 (1955), 450) und Alkylencarbonate (vgl. deutsche Offenlegungsschrift 30 40 474 = US-Patentschrift 4 351 744).

Die bekannten Lösemittel sind nicht uneingeschränkt verwendbar. Methanol verursacht Nebenreaktionen, die die Wasserbestimmung stören oder sogar unmöglich machen : Aldehyde bilden Acetale, verschiedene Ketone bilden Ketale, einige Carbonsäuren werden verestert, Silanole werden verethert und bestimmte Amine methyliert. 2-Methoxyethanol zeigt ein ähnliches Verhalten, wenn auch mit geringerer Aktivität. Dimethylformamid verändert die Stöchiometrie der Reaktion und ist aus diesem Grunde nicht geeignet. Alkylcarbonate haben prinzipiell den gleichen Nachteil ; außerdem lösen sie die Reaktionsprodukte nur sehr schlecht auf, so daß die Titration in einem methanolischen Arbeitsmedium ausgeführt werden muß, wobei wieder Nebenreaktionen auftreten.

Die FR-A-2 193 490 betrifft ein Verfahren zur vollautomatischen Bestimmung des Wassergehaltes von organischen Probeflüssigkeiten nach Karl Fischer. Das Verfahren sieht die Durchführung der Titration in einem zweiphasigen System vor, wobei folgende Verfahrensschritte eingehalten werden :

a) In einem Titrationsgefäß wird zuerst zu einer flüssigen stationären Phase tropfenweise genügend Karl-Fischer-Reagenz zugegeben, um sie wasserfrei zu machen.

b) Die Probe wird anschließend fein verteilt und kontinuierlich der wasserfreien, stationären flüssigen Phase zugeführt, wobei sie das in der Probe enthaltene Wasser aufnimmt. Gleichzeitig wird kontinuierlich tropfenweise genügend Karl-Fischer-Reagenz der flüssigen stationären Phase zugegeben, damit sie gerade wasserfrei bleibt.

c) Während dieses Vorgangs wird die zu einem vorgegebenen Probenvolumen zugegebene Menge an Karl-Fischer-Reagenz ermittelt. Unter der « stationären flüssigen Phase » wird definitionsgemäß eine Flüssigkeit verstanden, die nicht mit dem Karl-Fischer-Reagenz reagiert, in der Probe unlöslich ist und außerdem eine höhere Dichte besitzt als die der Probe.

Einige geeignete Alkohole, die als flüssige stationäre Phase bei dem bekannten Verfahren geeignet sind, sind beispielsweise Diethylenglykol, Glycerin und 3-Chlor-propandiol-1,2.

Wesentlich bei dem bekannten Verfahren ist die Tatsache, daß die flüssige Probe, deren Wassergehalt bestimmt werden soll, sich nicht in der flüssigen stationären Phase löst, sondern mit dieser flüssigen stationären Phase vielmehr ein zweiphasiges System bildet.

Über das bei diesem bekannten Verfahren benutzte Karl-Fischer-Reagenz werden keine besonderen Angaben gemacht. Das bedeutet, daß das benutzte Karl-Fischer-Reagenz die übliche Standardzusammensetzung besitzt und aus einer Lösung von Jod, Schwefeldioxyd, Pyridin (oder einer anderen Base) in Methanol besteht. Irgendwelche Hinweise darauf, von dieser Standardzusammensetzung des Karl-Fischer-Reagenzes abzuweichen, insbesondere das Methanol ganz oder teilweise durch die bei dem Verfahren benutzte flüssige stationäre Phase zu ersetzen, können nicht entnommen werden.

Aus der Literaturstelle Analytical Chemistry, Vol. 42, 1970, Seiten 1428-1429, ist es bei der Bestimmung von Wasser in Nylon mit Karl-Fischer-Reagenzien bekannt, die Nylon-Probe in fluorierten Alkoholen, nämlich Hexafluoroisopropanol oder Trifluoroethanol, aufzulösen. Auch bei diesem Verfahren wird das übliche Karl-Fischer-Reagenz verwendet.

Aufgabe der Erfindung ist die Bereitstellung eines Reagenzes für die Wasserbestimmung, das eine weitgehend störungsfreie Analyse ermöglicht.

Die Erfindung betrifft ein Reagenz für die Wasserbestimmung, enthaltend Schwefeldioxid, eine Base und Jod oder ein Jodid sowie ein Lösemittel, und ist dadurch gekennzeichnet, daß das Lösemittel zu mehr als 10 Gewichtsprozent aus einem einwertigen oder zweiwertigen Alkanol mit 1 bis 3 Kohlenstoffatomen, das 1 bis 4 Halogenatome und/oder 1 bis 4-gegebenenfalls substituierte-Phenylreste aufweist, wobei die Halogenatome an hydroxylgruppenfreie Kohlenstoffatome gebunden sind, besteht.

Das einwertige oder zweitwertige Alkanol dient als Lösemittel für die Agentien des KF-Reagenzes oder als Lösemittelkomponente des KF-Reagenzes. Erfindungsgemäß eignen sich bestimmte einwertige oder zweiwertige Alkanole, nämlich solche, die 1 bis 3 Kohlenstoffatome und 1 bis 4 Halogenatome und/oder 1 bis 4 Phenylreste, die ihrerseits Substituenten tragen können, aufweisen (wobei die Halogenatome an hydroxylgruppenfreie Kohlenstoffatome gebunden sind). Die Halogenatome sind Brom-, Jod-, Fluor- und vorzugsweise Chloratome, und die an den Phenylresten befindlichen Substituenten sind Halogenatome, niedere Alkylreste oder niedere Alkoxyreste mit jeweils höchstens 4 Kohlenstoffatomen.

Geeignete Alkanole sind beispielsweise 2-Chlorethanol, 2-Bromethanol, 2-Jodethanol, 2-Fluorethanol, 2,2,2-Trichlorethanol, 2,2,2-Tribromethanol, 2,2,2-Trifluorethanol, 1-Brompropanol(2), 2-Chlorpropanol(1), 3-Chlorpropandiol-(1,2), 2,2,3,3-Tetrafluorpropanol(1), Benzylakohol, 2-Brombenzylalkohol, 3-Methoxybenzylalkohol, 4-Methoxybenzylalkohol, 4-Methylbenzylalkohol, 1-Phenylethanol, 2-Phenylethanol, 2-Phenoxyethanol, Benzhydrol und Tetraphenylethandiol. Die Alkanole werden einzeln oder auch im Gemisch miteinander verwendet. Gegebenenfalls werden sie im Gemisch mit einem anderen organischen Lösemittel eingesetzt, wobei die Menge des Alkanols mehr als 10, vorzugsweise mindestens 25 Gewichtsprozent des Lösemittelgemisches beträgt.

Als zusätzliche organische Lösemittel eignen sich niedere aliphatische Alkohole wie Methanol, Ethanol, Propanol, Ethylenglykol und Ethylenglykolmonomethylether sowie insbesondere hydroxylgruppenfreie, nicht-hygroskopische organische Lösemittel, vorzugsweise flüssige Kohlenwasserstoffe und flüssige Halogenkohlenwasserstoffe ; die Menge dieses Lösemittels beträgt gegebenenfalls weniger als 90, vorzugsweise höchstens 75 Gewichtsprozent des Lösemittelgemisches.

Das bevorzugt eingesetzte zusätzliche Lösemittel ist ein aliphatischer Kohlenwasserstoff mit 5 bis 10 Kohlenstoffatomen, vorzugsweise 6, 7 oder 8 Kohlenstoffatomen, oder ein aromatischer, gegebenenfalls alkylsubstituierter Kohlenwasserstoff mit 6 bis 12 Kohlenstoffatomen, vorzugsweise 6, 7 oder 8 Kohlenstoffatomen. Beispiele hierfür sind n-Pentan, n-Hexan, 2,3-Dimethylbutan, 3-Methylhexan, Methylcyclopentan, n-Heptan, Cycloheptan, i-Octan und Dekahydronaphthalin sowie Benzol, Toluol, 1,2-Diethylbenzol, Xylol und 1,3-Dimethylnaphthalin. Der Halogenkohlenwasserstoff ist ein aliphatischer Halogenkohlenwasserstoff mit 1 bis 10 Kohlenstoffatomen, vorzugsweise 1 bis 7 Kohlenstoffatomen, oder ein aromatischer Halogenkohlenwasserstoff mit 6 bis 10 Kohlenstoffatomen, vorzugsweise 6 oder 7 Kohlenstoffatomen. Beispiele hierfür sind Chloroform, Dichlormethan, Tetrachlormethan, 1,1,2,2-Tetrachlorethan, 1,1,1-Trichlorethan, 2-Brombutan, 1-Brom-3-chlorpropan, 1-Chlorhexan, 1,2-Dibrom-1,1-dichlorethan, 1,2-Dibrom-1,1-difluorethan, 1,2-Dichlorethan, 1,6-Dichlorhexan, 2,2-Dichlorpropan, 1-Fluorheptan, Pentachlorethan und Perfluorbutyljodid sowie Chlorbenzol, 3-Chlortoluol, 4-Bromchlorbenzol, 1,2-Dibrombenzol, 1,4-Difluorbenzol und 3-Brombenzotrifluorid.

Das erfindungsgemäße Reagenz enthält üblicherweise 0,1 bis 10 Mol, vorzugsweise 0,5 bis 3 Mol Schwefeldioxid, 0,1 bis 3 Mol, vorzugsweise 0,1 bis 1 Mol Jod oder eines Jodids und 0,1 bis 10 Mol, vorzugsweise 0,5 bis 5 Mol einer Base, jeweils bezogen auf 1 Liter Reagenz. Das jodhaltige Reagenz wird zur volumetrischen Titration und das jodidhaltige Reagenz zur coulometrischen Titration verwendet.

Das Schwefeldioxid wird gegebenenfalls im Gemisch mit einer Säure, vorzugsweise einer Carbonsäure, eingesetzt. Das Molverhältnis von Schwefeldioxid zu Säure beträgt dabei 20 : 1 bis 1 : 5, vorzugsweise 2 : 1 bis 1 : 2 ; die Menge des Schwefeldioxids ist dann um die entsprechende Menge der Säure vermindert. Geeignete Säuren sind beispielsweise Mineralsäuren wie Schwefelsäure und Jodwasserstoffsäure sowie insbesondere Carbonsäuren wie Benzoesäure und Salicylsäure.

Die in dem erfindungsgemäßen Reagenz enthaltene Base ist üblicherweise Pyridin oder 2-Methylpyridin oder ein aliphatisches, gegebenenfalls 1,2 oder 3 Sauerstoffatome enthaltendes Amins, z. B. Ethanolamin, Diethanolamin und Triethanolamin, oder eine fünf- oder sechsgliedrige, gegebenenfalls substituierte, heterocyclische Verbindung mit mindestens 2 Heteroatomen, wobei mindestens 1 Heteroatom ein Stickstoffatom ist, z. B. Imidazol und 2-Methylimidazol. Ebenfalls geeignet sind Salze von Carbonsäuren, z. B. Zinkacetat, Natriumacetat und Natriumbenzoat, sowie Ammoniumsalze von Carbonsäuren, z. B. Ammoniumacetat, Ammoniumbenzoat, Diethanolammoniumacetat und Diethanolammoniumbenzoat.

Das erfindungsgemäße Reagenz wird hergestellt durch Lösen der Agentien in dem jeweiligen Lösemittel, das eine Temperatur von 15 bis 50 °C, vorzugsweise von 20 bis 40 °C aufweist.

Das Reagenz wird zur Bestimmung des Wassergehaltes von festen oder flüssigen Substanzen verwendet, wobei die Bestimmung volumetrisch oder coulometrisch durchgeführt wird. Das Reagenz ist sowohl als Einkomponentenreagenz als auch als Zweikomponentenreagenz einsatzfähig. Es ist dadurch ausgezeichnet, daß die bei der Wasseranalyse ablaufende Reaktion nicht gestört wird. Der Endpunkt der Titration ist visuell einwandfrei erkennbar.

Die folgenden Beispiele dienen zur näheren Erläuterung der Erfindung.

**Beispiel 1**

395 g Pyridin (5 mol) wurden bei Raumtemperatur in 500 ml wasserfreiem Benzylalkohol gelöst, und in die Lösung wurden unter Kühlen bei einer Maximaltemperatur von 40 °C 96 g Schwefeldioxid (1,5 mol) eingeleitet. In der Lösung wurden dann 80 g Jod (0,31 mol) gelöst, und die Gesamtlösung wurde mit Benzylalkohol auf 1 l aufgefüllt.

**Beispiel 2**

136 g Imidazol (2 mol) wurden bei Raumteperatur in 600 ml wasserfreiem 3-Chlorpropandiol(1,2) gelöst, und in die Lösung wurden unter Kühlung auf eine Temperatur von 40 °C 96 g Schwefeldioxid (1,5 mol) eingeleitet. In der Lösung wurden dann 100 g Jod (0,39 mol) gelöst, und die Gesamtlösung wurde mit 3-Chlorpropandiol(1,2) auf 1 l aufgefüllt.

**Beispiel 3**

105 g Diethanolamin (1 mol) wurden bei Raumtemperatur in einem Gemisch aus je 400 g wasserfreiem 2-Phenylethanol und Chloroform gelöst, und in die Lösung wurden unter Kühlung auf eine Temperatur von 30 °C 64 g Schwefeldioxid (1 mol) eingeleitet. Die Lösung wurde dann mit dem genannten Lösemittelgemisch auf 1 l aufgefüllt (Lösung A).

30 g Jod (0,12 mol) wurden in 500 ml des genannten Lösemittelgemisches gelöst (Lösung B).

**Beispiel 4**

82 g 2-Methylimidazol (1 mol) wurden bei Raumtemperatur in 1 l wasserfreiem 2-Chlorpropanol (1) gelöst. In die Lösung wurden dann 17 g Kaliumjodid (0,1 mol) und 12,8 Schwefeldioxid (0,2 mol) eingeleitet, wobei die Temperatur des Gemisches durch Kühlen auf 30 °C gehalten wurde.

**Anwendungsbeispiel 1**

In 50 ml Methanol wurden 2 ml Essigsäure gelöst und mit dem nach Beispiel 1 erhaltenen Reagenz in einem handelsüblichen Titrierautomaten titriert. Der Wassergehalt des Methanols wurde durch eine analoge Titration ermittelt.

**Anwendungsbeispiel 2**

25 ml 3-Chlorpropandiol (1,2) wurden durch Titration mit dem nach Beispiel 2 erhaltenen Reagenz entwässert. In das entwässerte Lösemittel wurden 2 ml Aceton eingewogen, und der Wassergehalt wurd durch Titration in einem handelsüblichen Titrierautomaten ermittelt.

**Anwendungsbeispiel 3**

30 ml der Lösung A aus Beispiel 3 wurden durch Titration mit der zugehörigen Lösung B entwässert. In die entwässerte Lösung wurden 2 ml Benzaldehyd eingewogen und mit der Lösung B in einem handelsüblichen Titrierautomaten titriert.

**Anwendungsbeispiel 4**

Anwendungsbeispiel 3 wurde wiederholt, jedoch wurde als Lösung B nun eine Lösung von 50 g Jod (0,20 mol) in 1 l Xylol verwendet.

**Anwendungsbeispiel 5**

50 ml 2-Chlorethanol wurden durch Titration mit einem handelsüblichen KF-Reagenz entwässert. (Das Reagenz enthielt 0,35 mol Jod, 1,5 mol Schwefeldioxid und 3,2 mol Pyridin pro Liter sowie 2-Methoxyethanol als Lösemittel.) In das entwässerte Lösungsmittel wurden 2 ml Methylethylketon eingewogen und mit dem vorgenannten Reagenz titriert.

**Anwendungsbeispiel 6**

25 ml des nach Beispiel 4 erhaltenen Reagenzes wurden im Anodenraum eines handelsüblichen KF-Coulometers oxidativ entwässert. In die entwässerte Lösung wurde 1 ml Ameisensäure eingewogen und coulometrisch titriert.

**Patentansprüche**

1. Reagenz für die Wasserbestimmung, enthaltend Schwefeldioxid, eine Base und Jod oder ein Jodid sowie ein Lösemittel, dadurch gekennzeichnet, daß das Lösemittel zu mehr als 10 Gewichtsprozent aus einem einwertigen oder zweiwertigen Alkanol mit 1 bis 3 Kohlenstoffatomen, das 1 bis 4 Halogenatome und/oder 1 bis 4 — gegebenenfalls substituierte — Phenylreste aufweist, wobei die Halogenatome an hydroxylgruppenfreie Kohlenstoffatome gebunden sind, besteht.

2. Reagenz nach Anspruch 1, dadurch gekennzeichnet, daß das Lösemittel zu mehr als 10 Gewichtsprozent aus dem einwertigen oder zweiwertigen Alkanol und zu weniger als 90 Gewichtsprozent aus einem hydroxylgruppenfreien organischen Lösemittel besteht.

3. Reagenz nach Anspruch 1 und/oder 2, dadurch gekennzeichnet, daß das Lösemittel zu mindestens 25 Gewichtsprozent aus dem Alkanol und zu höchstens 75 Gewichtsprozent aus einem hydroxylgruppenfreien Lösemittel besteht.

4. Reagenz nach einem oder mehreren der Ansprüche 1 bis 3, dadurch gekennzeichnet, daß das Lösemittel aus dem einwertigen oder zweiwertigen Alkanol im Gemisch mit einem Kohlenwasserstoff besteht.

5. Reagenz nach einem oder mehreren der Ansprüche 1 bis 4, dadurch gekennzeichnet, daß das Lösemittel aus dem Alkanol im Gemisch mit einem Halogenkohlenwasserstoff besteht.

6. Reagenz nach einem oder mehreren der Ansprüche 1 bis 5, dadurch gekennzeichnet, daß das Lösemittel aus dem Alkanol im Gemisch mit einem aliphatischen Kohlenwasserstoff mit 5 bis 10, vorzugsweise 6, 7 oder 8, Kohlenstoffatomen besteht.

7. Reagenz nach einem oder mehreren der Ansprüche 1 bis 6, dadurch gekennzeichnet, daß das Lösemittel aus dem Alkanol im Gemisch mit einem aromatischen, gegebenenfalls alkylsubstituierten Kohlenwasserstoff mit 6 bis 12, vorzugsweise 6, 7 oder 8, Kohlenstoffatomen besteht.

8. Reagenz nach einem oder mehreren der Ansprüche 1 bis 7, dadurch gekennzeichnet, daß das Lösemittel aus dem Alkanol im Gemisch mit einem aliphatischen Halogenkohlenwasserstoff mit 1 bis 10, vorzugsweise 1 bis 7, Kohlenstoffatomen besteht.

9. Reagenz nach einem oder mehreren der Ansprüche 1 bis 8, dadurch gekennzeichnet, daß das Lösemittel aus dem Alkanol im Gemisch mit einem aromatischen Halogenkohlenwasserstoff mit 6 bis 10, vorzugsweise 6 oder 7, Kohlenstoffatomen besteht.

10. Reagenz nach einem oder mehreren der Ansprüche 1 bis 9, dadurch gekennzeichnet, daß in einer Lösung A das Schwefeldioxid und die Base in dem Lösemittel und in einer Lösung B das Iod in dem Lösemittel enthalten sind.

## Claims

1. A reagent for the determination of water, containing sulfur dioxide, a base and iodine or an iodide as well as a solvent, characterized in that the solvent is composed of more than 10 per cent by weight of a monohydric or dihydric alkanol which has 1 to 3 carbon atoms and contains 1 to 4 halogen atoms and/or 1 to 4 — optionally substituted — phenyl radicals, the halogen atoms being attached to carbon atoms which are free from hydroxyl groups.

2. The reagent according to claim 1, characterized in that the solvent consists of more than 10 per cent by weight of the monohydric or dihydric alkanol and less than 90 per cent weight of an organic solvent which is free from hydroxyl groups.

3. The reagent according claim 1 and/or 2, characterized in that the solvent consists of at least 25 per cent by weight of the alkanol and not more than 75 per cent by weight of a solvent which is free from hydroxyl groups.

4. The reagent according to one or several of claims 1 to 3, characterized in that the solvent consists of the monohydric or dihydric alkanol mixed with a hydrocarbon.

5. The reagent according to one or several of claims 1 to 4, characterized in that the solvent consists of the alkanol mixed with a halogenated hydrocarbon.

6. The reagent according to one or several of claims 1 to 5, characterized in that the solvent consists of the alkanol mixed with an aliphatic hydrocarbon having 5 to 10, preferably 6, 7 or 8 carbon atoms.

7. The reagent according to one or several of claims 1 to 6, characterized in that the solvent consists of the alkanol mixed with an aromatic, optionally alkylsubstituted, hydrocarbon having 6 to 12, preferably 6, 7 or 8 carbon atoms.

8. The reagent according to one or several of claims 1 to 7, characterized in that the solvent consists of the alkanol mixed with an aliphatic halogenated hydrocarbon having 1 to 10, preferably 1 to 7, carbon atoms.

9. The reagent according to one or several of claims 1 to 8, characterized in that the solvent consists of the alkanol mixed with an aromatic halogenated hydrocarbon having 6 to 10, preferably 6 or 7, carbon atoms.

10. The reagent according to one or several of claims 1 to 9, characterized in that in a solution A there are contained the sulfur dioxide and a base in the solvent and in a solution B there is contained the iodine in the solvent.

## Revendications

1. Réactif pour aquamétrie, contenant de l'anhydride sulfureux, une base et de l'iode ou un iodure, ainsi qu'un solvant, caractérisé en ce que le solvant est constitué de plus de 10 % en poids d'un mono- ou dialcanol ayant de 1 à 3 atomes de carbone, comportant 1 à 4 atomes d'halogène et/ou 1 à 4 radicaux phényle éventuellement substitués, les atomes d'halogène étant fixés aux atomes de carbone exempts de groupes hydroxyle.

2. Réactif selon la revendication 1, caractérisé en ce que le solvant est constitué de plus de 10 % en poids du mono- ou dialcanol, et de moins de 90 % en poids d'un solvant organique exempt de groupes hydroxyle.

3. Réactif selon la revendication 1 et/ou 2, caractérisé en ce que le solvant est constitué d'au moins 25 % en poids de l'alcanol et d'au plus 75 % en poids d'un solvant exempt de groupes hydroxyle.

4. Réactif selon l'une ou plusieurs des revendications 1 à 3, caractérisé en ce que le solvant est constitué du mono- ou du dialcanol, en mélange avec un hydrocarbure.

5. Réactif selon l'une ou plusieurs des revendications 1 à 4, caractérisé en ce que le solvant est constitué de l'alcanol en mélange avec un hydrocarbure halogéné.

6. Réactif selon l'une ou plusieurs des revendications 1 à 5, caractérisé en ce que le solvant est constitué de l'alcanol en mélange avec un hydrocarbure aliphatique ayant de 5 à 10, de préférence 6, 7 ou 8 atomes de carbone.

7. Réactif selon l'une ou plusieurs des revendications 1 à 6, caractérisé en ce que le solvant est constitué de l'alcanol en mélange avec un hydrocarbure aromatique ayant de 6 à 12, de préférence 6, 7 ou 8 atomes de carbone, cet hydrocarbure étant éventuellement substitué par un radical alkyle.

8. Réactif selon l'une ou plusieurs des revendications 1 à 7, caractérisé en ce que le solvant est constitué de l'alcanol en mélange avec un hydrocarbure halogéné aliphatique ayant de 1 à 10, de préférence de 1 à 7 atomes de carbone.

9. Réactif selon l'une ou plusieurs des revendications 1 à 8, caractérisé en ce que le solvant est constitué de l'alcanol en mélange avec un hydrocarbure halogéné aromatique ayant de 6 à 10, de préférence 6 ou 7 atomes de carbone.

10. Réactif selon l'une ou plusieurs des revendications 1 à 9, caractérisé en ce que, dans une solution A, l'anhydride sulfureux et la base sont contenus dans le solvant, et, dans une solution B, l'iode est contenu dans le solvant.